(19) Europäisches Patentamt
European Patent Office
Office européen des brevets

(11) **EP 4 130 184 B1**

(12) **EUROPEAN PATENT SPECIFICATION**

(45) Date of publication and mention
of the grant of the patent:
**08.10.2025 Bulletin 2025/41**

(21) Application number: **21776358.0**

(22) Date of filing: **26.03.2021**

(51) International Patent Classification (IPC):
*C09J 11/06* (2006.01)    *C09J 163/00* (2006.01)
*C09J 175/04* (2006.01)    *C09J 175/06* (2006.01)
*C09J 175/08* (2006.01)    *C08G 18/61* (2006.01)
*C08G 18/71* (2006.01)    *C08G 18/00* (2006.01)
*C08G 18/10* (2006.01)    *C08G 18/28* (2006.01)
*C08G 18/32* (2006.01)    *C08G 18/44* (2006.01)
*C08G 18/48* (2006.01)    *C08G 18/62* (2006.01)
*C08G 18/76* (2006.01)

(52) Cooperative Patent Classification (CPC):
(C-Sets available)
**C08G 18/4854; C08G 18/003; C08G 18/10;
C08G 18/289; C08G 18/3237; C08G 18/44;
C08G 18/4825; C08G 18/61; C08G 18/6204;
C08G 18/718; C08G 18/7671; C08G 59/5033;
C09J 163/00; C09J 175/06; C09J 175/08;**   (Cont.)

(86) International application number:
**PCT/JP2021/013080**

(87) International publication number:
**WO 2021/193961 (30.09.2021 Gazette 2021/39)**

(54) **TWO-LIQUID CURABLE ADHESIVE COMPOSITION**

HÄRTBARE KLEBSTOFFZUSAMMENSETZUNG AUS ZWEI FLÜSSIGKEITEN

COMPOSITION ADHÉSIVE DURCISSABLE À DEUX LIQUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2020 JP 2020057587**

(43) Date of publication of application:
**08.02.2023 Bulletin 2023/06**

(73) Proprietor: **The Yokohama Rubber Co., Ltd.**
**Hiratsuka-shi, Kanagawa 254-8601 (JP)**

(72) Inventors:
• **KAGEYAMA, Hirokazu**
**Hiratsuka-shi, Kanagawa 254-8601 (JP)**
• **KIMURA, Kazushi**
**Hiratsuka-shi, Kanagawa 254-8601 (JP)**
• **YAMAMOTO, Yutaro**
**Hiratsuka-shi, Kanagawa 254-8601 (JP)**

(74) Representative: **Grünecker Patent- und
Rechtsanwälte
PartG mbB
Leopoldstraße 4
80802 München (DE)**

(56) References cited:
**EP-A1- 3 623 439**     **WO-A1-2014/157151**
**WO-A1-2014/184270**     **JP-A- 2006 291 060**
**JP-A- 2014 522 426**     **JP-A- 2016 074 840**
**JP-A- 2020 055 921**     **JP-A- H0 363 060**
**US-A1- 2014 031 500**

Remarks:
The file contains technical information submitted
after the application was filed and not included in this
specification

**(Cont. next page)**

(52) Cooperative Patent Classification (CPC): (Cont.)
C08K 5/0016; C08K 2003/265

C-Sets
**C08G 18/10, C08G 18/289;**
**C08G 18/10, C08G 18/48;**
**C08G 18/10, C08G 18/62;**
**C08G 18/10, C08G 18/6685;**

**C09J 163/00, C08K 3/26, C08K 3/04, C08K 3/36,**
**C08L 75/06, C08K 5/5477;**
**C09J 163/00, C08K 3/26, C08K 3/04, C08K 3/36,**
**C08L 75/08, C08K 5/5477;**
**C09J 175/06, C08K 3/26, C08K 3/04, C08K 3/36,**
**C08L 63/00, C08K 5/5477;**
**C09J 175/08, C08K 3/26, C08K 3/04, C08K 3/36,**
**C08L 63/00, C08K 5/5477**

## Description

Technical Field

The present invention relates to a two-part curable adhesive composition having a main agent and a curing agent.

Background Art

In structural members such as automotive bodies, components formed from different materials may be bonded together using an adhesive. By bonding through the adhesive, distortion and warpage can be suppressed even if a difference in coefficient of thermal expansion between the components is large. An adhesive used for this purpose is required to have good adhesive strength to, particularly, a part of a metal material.

Patent Document 1 describes a polyurethane resin composition having high adhesiveness and the like to metals, the polyurethane resin composition including, as a constituent, a polyester polyol having a phosphorus compound residue, and containing a polyurethane resin (A) having an acid value and a urethane group concentration in predetermined ranges, and an epoxy resin (B). Patent Document 2 discloses a room temperature-curable polyurethane resin composition comprising a urethane prepolymer A, and an additive, obtained by mixing in advance, a urethane prepolymer B, an epoxy resin and a ketimine mixed, where the amount of the additive is 1-50 pts.mass based on 100 pts.mass of the urethane prepolymer A. Patent Document 2 discloses a two-component polyurethane adhesive consisting of a polyol component and of a polyisocyanate component, where the polyol component comprises a triol with molar mass from 1000 to 10 000 g/mol, a diol having two primary hydroxy groups and with molar mass from 60 to 150 g/mol, a poly(trimethylene oxide)diol or a poly(tetramethylene oxide)diol with molar mass from 200 to 3000 g/mol and an aliphatic polyamine. Patent Document 4 discloses an epoxy resin composition containing an epoxy resin (A), a urethane resin (B) in which the terminal isocyanate of the urethane prepolymer is blocked by at least one of an epsilon-polycaprolactam, an oxime, or a pyrazole, and in which bisphenol A is included in the backbone of the aforementioned urethane prepolymer, and a curing agent (C). Patent Document 5 discloses a structural adhesive composition containing an epoxy resin, a urethane resin formed by using a polyol comprising a long chain as a functional group, and an epoxy curing agent.

Citation List

Patent Literature

Patent Document 1: JP 5743042 B
Patent Document 2: JP 2006291060 A
Patent Document 3: WO 2014/184270 A1
Patent Document 4: US 2014/031500 A1
Patent Document 5: EP 3623439 A1

Summary of Invention

Technical Problem

For an adhesive used for bonding parts of a structural member, high adhesive strength against shear force is important. Furthermore, an adhesive used for this purpose is required to have not only the adhesive strength, but also good elongation at break so that the difference of thermal expansion between parts can be absorbed. However, for a known polyurethane-based adhesive, it is difficult to exhibit excellent physical properties for both of the adhesive strength against shear force and the elongation at break.

An object of the present invention is to provide a polyurethane-based adhesive composition having excellent elongation at break and adhesive strength.

Solution to Problem

An aspect of the present invention is a two-part curable adhesive composition containing:

a main agent (A) containing a urethane prepolymer (a1) and an epoxy compound (a2), and
a curing agent (B) containing a polyol compound (b1) and a polyamine compound (b2),

the urethane prepolymer (a1) being obtained by reacting a raw material polyisocyanate and a polyol compound (a3) having at least two hydroxy groups in a molecule, an equivalent ratio of isocyanate groups in the raw material polyisocyanate to a hydroxy group in the polyol compound (a3) being from 2.05 to 12, the polyol compound (a3) being completely converted into monomer units of the urethane prepolymer (a1),

the main agent (A) further containing, in addition to the urethane prepolymer (a1), a remaining polyisocyanate (a4) which is a remainder of the raw material polyisocyanate that has not been reacted with the polyol compound (a3), at least one of the main agent (A) or the curing agent (B) containing a silane compound (X),

an SP value of each of the polyol compound (a3) and the polyol compound (b1) being from 14.0 to 21.0 $(J/cm^3)^{1/2}$, and a difference between the SP value of the polyol compound (a3) and the SP value of the polyol compound (b1) being from 0.1 to 4.0 $(J/cm^3)^{1/2}$,

wherein the SP value refers to a value $\delta$ calculated by the following Small's equation:

$$\delta = d\Sigma G/M$$

wherein d refers to density, G refers to intermolecular gravitational constant, the Small constant, and M refers to the molecular weight.

An equivalent ratio of isocyanate groups in the main agent (A) to active hydrogen groups in the curing agent (B) is preferably from 0.8 to 4, and

an equivalent ratio of the isocyanate groups in the main agent (A) to amino groups in the polyamine compound (b2) is preferably from 1.2 to 6.

The polyol compound (a3) is preferably at least one selected from the group consisting of polyester polyol, polytetramethylene ether glycol, polycarbonate polyol, polycaprolactone polyol, and partially modified products obtained by partially modifying these.

The polyol compound (b1) is preferably at least one selected from the group consisting of polyoxypropylene glycol, polybutadiene polyol, polyisoprene polyol, polyacrylic polyol, and partially modified products obtained by partially modifying these.

An epoxy equivalent of the epoxy compound (a2) is preferably from 100 to 500 g/eq.

The epoxy compound (a2) is preferably an epoxy compound having at least one urethane bond in a molecule.

The silane compound (X) is preferably a silane compound having at least one isocyanate group in a molecule.

A mass of the epoxy compound (a2) with respect to a mass of the two-part curable adhesive composition is preferably from 0.1 to 30 mass%.

A tensile lap-shear strength in accordance with JIS K6850 of a cured product obtained by curing the two-part curable adhesive composition is preferably 10 MPa or greater.

Advantageous Effects of Invention

According to the two-part curable adhesive composition of the aspect described above, a polyurethane-based adhesive composition having excellent elongation at break and adhesive strength can be provided.

Description of Embodiments

A two-part curable adhesive composition of the present embodiment will be explained below. The present embodiment includes various embodiments described below.

Adhesive Composition

The two-part curable adhesive composition (hereinafter, also simply referred to as adhesive composition) of the present embodiment has a main agent (A) and a curing agent (B).

Main Agent (A)

The main agent (A) contains a urethane prepolymer (a1) and an epoxy compound (a2).

The urethane prepolymer (a1) is obtained by reacting a raw material polyisocyanate and a polyol compound (a3). Accordingly, the urethane prepolymer (a1) contains a monomer unit of the polyisocyanate and a monomer unit of the polyol compound (a3). Specifically, an equivalent ratio (hereinafter, also referred to as index) of isocyanate groups in the raw material polyisocyanate to a hydroxy group in the polyol compound (a3) is from 2.05 to 12, and this reaction is performed so that the polyol compound (a3) is completely converted into monomer units of the urethane prepolymer (a1).

By setting the index to 2.05 or greater so that the amount of the isocyanate groups is excessively more than the amount of the hydroxy groups, many hard segments which provide hydrogen bonding with a metal are formed in the cured product. Furthermore, since the index is 2.05 or greater, a large amount of remaining polyisocyanate (isocyanate remaining after the reaction between the raw material polyisocyanate and the polyol compound) that easily react with metals is contained in the main agent (A). Accordingly, by setting the index to 2.05 or greater, a cured product having excellent adhesive strength to metals, specifically, a cured product having an adhesive strength of 10 MPa or greater, tends to be obtained. In the present specification, the adhesive strength means tensile lap-shear strength in accordance with JIS K6850.

Furthermore, by setting the index to 2.05 or greater so that the amount of the isocyanate groups is excessively more than the amount of the hydroxy groups, the remaining polyisocyanate can be adequately reacted with the curing agent (B). This makes it easier to obtain a cured product having excellent elongation at break, specifically, a cured product having an elongation at break of 100% or greater. In the present specification, the elongation at break means an elongation at the time of rupture in accordance with JIS K6251.

Furthermore, setting the index to 2.05 or greater makes it easier to obtain a cured product having excellent strength at break, specifically, a cured product having a strength at break of 10 MPa or greater, because of a large amount of hard segments in the cured product. In the present specification, the strength at break means tensile strength in accordance with JIS K6251.

The index is preferably 3 or greater and more preferably 4 or greater. As the index is higher, generation of remaining polyol compound (b1) can be avoided because isocyanate groups are consumed when the main agent (A) and the curing agent (B) are mixed and reacted, and an adverse effect on the physical properties of the cured product can be avoided. On the other hand, in a case where the equivalent ratio is too large, the elongation at break may be too low. Thus, the equivalent ratio is 12 or less, preferably 10 or less and more preferably 8 or less.

According to the adhesive composition of the present embodiment, after the raw material polyisocyanate is added to the polyol compound (a3), a product resulting from reaction with the active hydrogen groups of the curing agent (B) and a product resulting from reaction with the active hydrogen groups of the curing agent (B) after the raw material polyisocyanate remains without reacting with the polyol compound (a3) are formed in the cured product. Thus, because of the time lag between these reactions of isocyanate groups and coexistence of the polyol compound (a3) with the polyol compound (b1) of the curing agent (B), a cured product having a characteristic structure is obtained. Such a cured product formed on a metal surface can be in a form in which at least one of a soft segment or a hard segment is further bonded to the metal via the epoxy compound (a2) or the silane compound (X).

The raw material polyisocyanate has at least one, preferably two or more, isocyanate groups in a molecule.

Specific examples of the polyisocyanate compound used for the raw material polyisocyanate include aromatic polyisocyanates such as TDI (e.g., 2,4-tolylene diisocyanate (2,4-TDI) and 2,6-tolylene diisocyanate (2,6-TDI)), MDI (e.g., 4,4'-diphenylmethane diisocyanate (4,4'-MDI) and 2,4'-diphenylmethane diisocyanate (2,4'-MDI)), 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), and triphenylmethane triisocyanate; aliphatic polyisocyanates such as pentamethylene diisocyanate (PDI), hexamethylene diisocyanate (HDI), trimethylhexamethylene diisocyanate (TMHDI), lysine diisocyanate, and norbornane diisocyanate (NBDI); alicyclic polyisocyanates such as transcyclohexane-1,4-diisocyanate, isophorone diisocyanate (IPDI), bis(isocyanate methyl)cyclohexane ($H_6$XDI), and dicyclohexylmethane diisocyanate ($H_{12}$MDI); carbodiimide-modified polyisocyanates thereof; and isocyanurate-modified polyisocyanates thereof.

Among these, the raw material polyisocyanate is preferably an MDI.

Such a polyisocyanate may be used alone, or two or more types of these polyisocyanates may be used in combination.

According to one embodiment, the raw material polyisocyanate preferably includes at least one of diphenylmethane diisocyanate, polymeric methane diisocyanate, and isocyanate compound having an isocyanurate group from the viewpoint of improving reaction activity and exhibiting good strength when cured.

According to one embodiment, the raw material polyisocyanate preferably contains at least one aromatic ring in a molecule. Since such a raw material polyisocyanate is contained in the adhesive composition, the strength at break of a cured product is improved. Furthermore, such a raw material polyisocyanate has good interaction with the epoxy compound (a2).

The polyol compound (a3) is a polyol compound having at least two hydroxy groups in a molecule.

According to one embodiment, the number average molecular weight of the polyol compound (a3) is preferably 250 or greater, and more preferably 500 or greater. When the number average molecular weight of the polyol compound is less than the range described above, the elongation at break of the cured product decreases, and the cured product may become too hard. The number average molecular weight of the polyol compound (a3) is preferably 3000 or less.

From the perspective of contribution to improvement of adhesive strength of the cured product, as the polyol compound (a3), preferably, at least one selected from the group consisting of polyester polyol, polytetramethylene ether glycol, polycarbonate polyol, polycaprolactone polyol, and partially modified products obtained by partially modifying these is used.

Examples of the polyester polyol include condensation products (condensed polyester polyols) of low-molecular-weight polyhydric alcohols with a polybasic carboxylic acid.

Specific examples of the low-molecular-weight polyhydric alcohols include low-molecular-weight polyols such as ethylene glycol (EG), diethylene glycol, propylene glycol (PG), dipropylene glycol, 1,3-butanediol, 1,4-butanediol, pentanediol, neopentyl glycol, hexanediol, cyclohexanedimethanol, glycerin, 1,1,1-trimethylolpropane (TMP), 1,2,5-hexanetriol, and pentaerythritol; saccharides such as sorbitol; and the like.

Examples of the polybasic carboxylic acid include glutaric acid, adipic acid, azelaic acid, fumaric acid, maleic acid, pimelic acid, suberic acid, sebacic acid, phthalic acid, terephthalic acid, isophthalic acid, dimer acid, pyromellitic acid, other low-molecular-weight carboxylic acids, oligomeric acids, castor oil, and hydroxycarboxylic acids such as a reaction product of castor oil with ethylene glycol (or propylene glycol).

The polycarbonate polyol is produced through, for example, a reaction such as a methanol removal condensation reaction of polyol and dimethyl carbonate, a phenol removal condensation reaction of polyol and diphenyl carbonate, or an ethylene removal glycol condensation reaction of polyol and ethylene carbonate. Examples of the polyol used in these reactions include various saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, and polytetramethylene ether glycol; and alicyclic glycols such as 1,4-cyclohexane diglycol and 1,4-cyclohexane dimethanol.

Examples of the polycaprolactone polyols include those obtained by ring-opening polymerization of a lactone such as ε-caprolactone, α-methyl-ε-caprolactone, or ε-methyl-ε-caprolactone with a suitable polymerization initiator, and having hydroxy groups at both terminal ends.

Examples of the partially modified product include products obtained by introducing a modifying group into a molecule of polyester polyol, polytetramethylene ether glycol, polycarbonate polyol, or polycaprolactone polyol by copolymerization or the like. Examples of such a partially modified product include products in which a part of repeating units in a molecule are substituted by modified groups. Examples of the modifying group include alkylene groups. Specific examples of the alkylene group preferably include an ethylene group, a 1,2-propylene group, a 1,3-propylene group, a 2-methyl-1,3-propylene group, a 2,2-dimethyl-1,3-propylene group, a pentamethylene group, and a hexamethylene group. The number of carbons of the alkylene group is, for example, from 2 to 10. The modification amount is, for example, from 3 to 50 wt.%. The type and modification amount of the alkylene group are not limited to those described above and are appropriately selected. Specific examples of the partially modified products include modified polytetramethylene ether glycol. Examples of the modified polytetramethylene ether glycol include those in which a part of $-(OH_2)_4-O-$ in a molecule of a typical polytetramethylene ether glycol is substituted by $-R-O-$. R is preferably an alkylene group of the specific example described above having a number of carbons in the range described above. This modified polytetramethylene ether glycol can be produced by, for example, copolymerization of tetrahydrofuran and a diol using a heteropolyacid as a catalyst, or copolymerization of a diol or a cyclic ether which is a condensation product of a diol, and a butanediol.

The number average molecular weight of the urethane prepolymer (a1) is preferably 1,000 or greater and 15,000 or less, and more preferably 1,000 or greater and 10,000 or less.

Here, the number average molecular weight is a number average molecular weight (expressed in calibration with polystyrene) measured by gel permeation chromatography (GPC), and for the measurement, tetrahydrofuran (THF) and N,N-dimethylformamide (DMF) are preferably used as solvents.

The epoxy compound (a2) contains at least one, preferably at least two, epoxy groups in a molecule. The epoxy group is, for example, added to a molecular terminal.

According to the study of the present inventors, it was found that, by blending the epoxy compound (a2) together with the silane compound (X) described below in the adhesive composition, the effects of improving adhesive strength of the cured product to metals can be achieved. Furthermore, this epoxy compound (a2) has excellent interaction with the polyamine compound (b2) having an aromatic ring, especially a primary aromatic polyamine.

The epoxy compound (a2) has a high reactivity with the polyamine compound (b2) of the curing agent (B), and thus the epoxy compound (a2) is blended in the main agent (A).

As the epoxy compound (a2), for example, a single or a combination of epoxy resins can be used, and examples of the epoxy resins include bifunctional glycidyl ether type epoxy resins including, epoxy compounds having a bisphenyl group, such as bisphenol A type, bisphenol F type, brominated bisphenol A type, hydrogenated bisphenol A type, bisphenol S type, bisphenol AF type, and biphenyl type epoxy compounds, polyalkylene glycol type and alkylene glycol type epoxy compounds, epoxy compounds having a naphthalene ring, and epoxy compounds having a fluorene group; polyfunctional glycidyl ether type epoxy resins such as phenol novolac type, o-cresol novolac type, trishydroxyphenylmethane type, and tetraphenylolethane type epoxy resins; glycidyl ester type epoxy resins of synthetic fatty acid such as dimer acid; aromatic epoxy resins having a glycidyl amino group, such as N,N,N',N'-tetraglycidyl diaminodiphenylmethane (TGDDM), tetraglycidyl-m-xylylene diamine, triglycidyl-p-aminophenol, and N,N-diglycidyl aniline; and epoxy compounds having a tricyclodecane ring (e.g., epoxy compounds obtained by a production method in which dicyclopentadiene and cresols, such as m-cresol, or phenols are polymerized, and then the polymerization product is reacted with epichlorohydrin).

According to one embodiment, the epoxy compound (a2) is preferably an epoxy compound having at least one urethane bond in a molecule (urethane-modified epoxy compound). Such an epoxy compound (a2) easily reacts with a hydroxy group present on a metal surface and enhances the effect of improving adhesive strength of the cured product. Furthermore, such an epoxy compound (a2) has extremely good affinity with a urethane part of the urethane prepolymer (a1).

As the urethane-modified epoxy compound, for example, a compound that is obtained by reacting a urethane bond-containing compound (X) having an isocyanate group and a hydroxy group-containing epoxy compound (Y) is preferably used, the urethane bond-containing compound (X) being obtained by reacting a polyol compound ($x_1$) and a polyisocyanate compound ($x_2$).

Examples of the polyol compound ($x_1$) include polyether polyols such as polypropylene glycol, polyester polyol, adduct of hydroxy carboxylic acid and alkylene oxide, polybutadiene polyol, and polyolefin polyol. As the molecular weight of the polyol compound ($x_1$), from the perspective of excellent balance between flexibility and curability, the mass average molecular weight in a range of from 300 to 5000, especially in a range of from 500 to 2000, is preferably employed.

The polyisocyanate compound ($x_2$) is not particularly limited as long as the polyisocyanate compound ($x_2$) is a compound having two or more isocyanate groups. Examples thereof include aliphatic polymer isocyanate, aromatic polyisocyanate, and polyisocyanate group having an aromatic hydrocarbon group. Among these, aromatic polyisocyanate is preferred. Examples of the aromatic polyisocyanate include tolylene diisocyanate, diphenylmethane diisocyanate, and naphthalene diisocyanate.

A urethane prepolymer having a free isocyanate group at a terminal can be obtained by reacting the urethane bond-containing compound (X) and the hydroxy group-containing epoxy compound (Y). By reacting this urethane prepolymer with an epoxy resin having at least one hydroxy group in a molecule (e.g., diglycidyl ether of bisphenol A, diglycidyl ether of bisphenol F, diglycidyl ether of aliphatic polyhydric alcohol, and glycidol), a urethane-modified epoxy compound can be obtained.

Production of the urethane-modified epoxy compound is not particularly limited. For example, the production can be performed by reacting urethane and epoxy in a large amount of epoxy (e.g., epoxy resin). The epoxy used during production of the urethane-modified epoxy compound is not particularly limited. For example, known ones can be used.

As the urethane-modified epoxy compound, specifically, for example, ADEKA RESIN EPU-78-11, EPU-1395, EPU-17T-6, EPU-78-13S, EPU-6E, EPU-11N, EPU-15N, EPU-16AN, and EPU-18BN (available from Adeka Corporation) can be used.

Such an epoxy compound (a2) can be used alone, or a combination of two or more types of these epoxy compounds (a2) can be used.

The epoxy equivalent of the epoxy compound (a2) is preferably from 100 to 500 g/eq. When such an epoxy compound (a2) is contained in the adhesive composition, the effect of improving adhesive strength of the cured product is enhanced. In the present specification, the epoxy equivalent and added amount of the epoxy compound (a2) indicate amounts of an epoxy compound containing an excessive amount of epoxy resin used during production (e.g., urethane-modified epoxy compound).

In the adhesive composition, from 0.1 to 30 mass% of the epoxy compound (a2) is preferably contained. When the content of the epoxy compound (a2) is less than 0.1 mass%, the effect of improving adhesive strength of the cured product cannot be achieved adequately. When the content of the epoxy compound (a2) is more than 30 mass%, the characteristics of a polyurethane-based adhesive cannot be adequately exhibited, and improvement of elongation at break and strength at break of the cured product becomes difficult.

In addition to the urethane prepolymer (a1), the main agent (A) further contains a remaining polyisocyanate (a4).

The remaining polyisocyanate (a4) is the remainder of the raw material polyisocyanate that has not been reacted with the polyol compound (a3). Since the remaining polyisocyanate (a4) is contained in the main agent (A), reaction with the curing agent (B) can be rapidly performed. Accordingly, the curing time can be shortened, foaming due to reaction of the remaining polyisocyanate (a4) with water can be suppressed, and deterioration in tensile properties, such as elongation at break and strength at break, of the cured product can be suppressed.

Curing Agent (B)

The curing agent (B) contains a polyamine compound (b2) and a polyol compound (b1).

Since the polyamine compound (b2) exhibits a high reaction rate with an isocyanate group and the epoxy compound (a2), and thus the reaction of the polyamine compound (b2) with the main agent (A) proceeds rapidly. In this process, the urethane prepolymer (a1) grows while being cured. Furthermore, in the adhesive composition in which the main agent (A) and the curing agent (B) are mixed, heat is generated as the polyamine compound (b2) and the main agent (A) reacts, and thus the reaction between the polyol compound (b1) and the main agent (A) is promoted. Since the reaction promoting effect described above by the polyamine compound (b2) can be achieved, even when an excessive amount of isocyanate groups is contained in the main agent (A), foaming can be suppressed, and deterioration of the physical properties of the cured product can be suppressed.

The polyamine compound (b2) has two or more amino groups in a molecule. As the polyamine compound (b2), a known polyamine compound can be used.

Specific examples of the polyamine compound (b2) include aliphatic polyamines such as ethylenediamine, propylenediamine, butylenediamine, diethylenetriamine, triethylenetriamine, triethylenetetramine, tetraethylenepentamine, pentaethylenehexamine, hexamethylenediamine, trimethylhexamethylenediamine, 1,2-propanediamine, iminobispropylamine, methyliminobispropylamine, and 1,5-diamino-2-methylpentane (MPMD, available from Dupont K.K.); aromatic polyamines such as meta-phenylenediamine, ortho-phenylenediamine, para-phenylenediamine, m-xylylenediamine (MXDA), diaminodiphenyl methane, diaminodiphenyl sulfone, diamino diethyldiphenylmethane, diethylmethylbenzenediamine, 2-methyl-4,6-bis(methylthio)-1,3-benzenediamine, 4,4'-methylenebis(2-chloroaniline), 4,4'-methylenebis(3-chloro-2,6-diethylaniline), trimethylenebis(4-aminobenzoate), bis(4-amino-2,3-dichlorophenyl) methane; N-aminoethylpiperazine; monoamine having an ether bond in its main chain, such as 3-butoxyisopropylamine; diamines having a polyether backbone, that is exemplified by JEFFAMINE EDR148 available from Sun Techno Chemicals Co., Ltd.; alicyclic polyamines such as isophoronediamine, 1,3-bisaminomethylcyclohexane (1,3BAC, available from Mitsubishi Gas Chemical Company, Inc.), 1-cyclohexylamino-3-aminopropane, and 3-aminomethyl-3,3,5-trimethyl-cyclohexylamine; diamines having a norbornane backbone, such as norbornanediamine (NBDA, available from Mitsui Chemicals, Inc.); polyamide amines having an amino group at a molecular end of polyamide; 2,5-dimethyl-2,5-hexamethylene diamine, menthenediamine, 1,4-bis(2-amino-2-methylpropyl)piperazine, JEFFAMINE D230 and JEFFAMINE D400, available from Sun Techno Chemicals Co., Ltd., having polypropylene glycol (PPG) as a backbone. These polyamine compounds may be used alone or may be used in a combination of two or more types.

According to one embodiment, the polyamine compound (b2) is preferably the aromatic polyamine described above. With a polyamine other than the aromatic polyamine, the rate of reaction with the main agent (A) is too high, and the adhesive strength and elongation at break of the cured product may not be adequately improved. Furthermore, with a polyamine other than the aromatic polyamine, it is difficult to achieve good interaction between the epoxy compound (a2) and the remaining polyisocyanate (a4). From this perspective, the polyamine compound (b2) is particularly preferably a primary aromatic polyamine among the aromatic polyamines.

According to one embodiment, from the perspective of increasing the rate of reaction with isocyanate groups in the main agent (A), the polyamine compound (b2) preferably has a number average molecular weight of less than 500.

The polyol compound (b1) has at least two hydroxy groups in a molecule. The number average molecular weight of the polyol compound (b1) is preferably 500 or greater, and more preferably 1000 or greater. Since the polyol compound (b1) is contained in the curing agent (B), elongation at break of the cured product can be enhanced. When the number average molecular weight of the polyol compound (b1) is less than 500, the elongation at break of the cured product is reduced, and the cured product may become too hard.

Furthermore, the polyol compound (b1) slowly reacts with isocyanate groups in the main agent (A) compared to the polyamine compound (b2), and thus does not lead to an excessively short curing time and contributes to improvement of workability.

From the perspective of contribution to improvement of elongation at break of the cured product, the polyol compound (b1) is preferably at least one selected from the group consisting of polyoxypropylene glycol, polybutadiene polyol, polyisoprene polyol, polyacrylic polyol, and partially modified products obtained by partially modifying these. Examples of the partially modified product include products obtained by introducing a modifying group into a molecule of polyoxypropylene glycol, polybutadiene polyol, polyisoprene polyol, or polyacrylic polyol by copolymerization or the like. Examples of such a partially modified product include products in which a part of repeating units in a molecule are substituted by modified groups. The modifying group and modification amount are similar or identical to the modifying group and modification amount explained for the polyol compound (a3).

The polyol compound (b1) is preferably a polyol compound different from the polyol compound (a3). When the polyol compound (b1) and the polyol compound (a3) are the same polyol compound, it is difficult to provide adhesive strength and elongation at break of the cured product in a compatible manner.

The difference between the SP value of the polyol compound (a3) and the SP value of the polyol compound (b1) is from 0.1 to 4.0 $(J/cm^3)^{1/2}$. By setting the SP values of both of the polyol compounds to be 0.1 $(J/cm^3)^{1/2}$ or greater, the adhesive strength and elongation at break of the cured product are likely to be provided in a compatible manner, and by setting the SP values to be 4.0 $(J/cm^3)^{1/2}$ or less, compatibility between the main agent (A) and the curing agent (B) is ensured. The difference between the SP values is preferably from 0.1 to 2.0 $(J/cm^3)^{1/2}$, and more preferably from 0.1 to 1.0 $(J/cm^3)^{1/2}$.

In the present specification, an SP value refers to a value δ calculated by the following Small's equation.

$$\delta = d\Sigma G/M$$

In the equation, d refers to density, G refers to intermolecular gravitational constant (Small constant), and M refers to a molecular weight.

The SP value of each of the polyol compound (a3) and polyol compound (b1) is from 14.0 to 21.0 $(J/cm^3)^{1/2}$. When the SP values of the polyol compound (a3) and the polyol compound (b1) are not in the ranges described above, the polarity of each of the polyol compounds is too high or low, and thus the effect of improving adhesive strength and elongation at break of the cured product is impaired. Each of the SP values of the polyol compound (a3) and the polyol compound (b1) is preferably from 14.5 to 20.5 $(J/cm^3)^{1/2}$, and more preferably from 14.0 to 20.0 $(J/cm^3)^{1/2}$.

According to one embodiment, the equivalent ratio of the isocyanate groups in the main agent (A) to the active hydrogen groups in the curing agent (B) (hereinafter, also referred to as isocyanate group/active hydrogen group ratio) is preferably from 0.8 to 4. In the present specification, the active hydrogen groups in the curing agent (B) refer to hydroxy groups in the polyol compound (b1) and amino groups in the polyamine compound (b2). The isocyanate groups in the main agent (A) refer to isocyanate groups in the urethane prepolymer (a1) and in the remaining polyisocyanate (a4).

Even when the isocyanate group/active hydrogen group ratio is changed in the range of from 0.8 to 4, the adhesive strength and elongation at break of the cured product do not greatly change. Specifically, a ratio of change of the adhesive strength and the elongation at break is suppressed to within ± 20% with respect to the adhesive strength and the elongation at break when the mixing ratio (mass ratio) of the main agent (A) to the curing agent (B) is 1:1. According to one embodiment, the mixing ratio (mass ratio) of the main agent (A) to the curing agent (B) can be set to from 4:6 to 6:4.

The equivalent ratio of the isocyanate groups in the main agent (A) to the amino groups in the polyamine compound (b2) (hereinafter, also referred to as isocyanate group/amino group ratio) is preferably from 1.2 to 6. In a case where the isocyanate group/amino group ratio is less than 1.2, the isocyanate groups in the main agent (A) are less likely to react with the hydroxy groups in the polyol compound (b1), and the elongation at break of the cured product is difficult to be improved. On the other hand, in a case where the isocyanate group/amino group ratio exceeds 6, a curing rate of the adhesive composition is low, and the possibility of foaming increases.

According to one embodiment, the equivalent ratio of the isocyanate groups in the main agent (A) to the hydroxy groups in the polyol compound (b1) (hereinafter referred to as isocyanate group/hydroxy group ratio) is preferably from 2 to 12. In a case where the isocyanate group/hydroxy group ratio is less than 2, when the isocyanate group/amino group ratio is small, the curing rate is too high, and the elongation at break of the cured product decreases. On the other hand, when the isocyanate group/hydroxy group ratio is less than 2 and the isocyanate group/amino group ratio is large, the curing rate is low, foaming tends to occur, and thus it is difficult to improve the adhesive strength. In a case where the isocyanate group/hydroxy group ratio exceeds 12, foaming tends to occur.

According to one embodiment, the polyol compound (b1) preferably contains at least one of polyethylene glycol or polypropylene glycol. Furthermore, according to one embodiment, the polyol compound (b1) particularly preferably has a primary hydroxy group at a terminal.

According to one embodiment, the equivalent ratio of the amino groups in the polyamine compound (b2) to the hydroxy groups in the polyol compound (b1) (hereinafter, also referred to as "amino group/hydroxy group ratio") is preferably from 1.5 to 6. Accordingly, the rate of curing reaction can be appropriately set, and the adhesive strength and the elongation at break can be improved in a well-balanced manner. The equivalent ratio is preferably from 1.5 to 4.

According to one embodiment, a ratio of the mass of the polyol compound (a3) reacted with the raw material polyisocyanate to the mass of the polyol compound (b1) is preferably 1 or less from the perspective of adjusting the physical properties of the cured product.

The main agent (A) and the curing agent (B) described above each may further contain, if necessary, various known additives, such as fillers, curing catalysts, plasticizers, anti-aging agents, antioxidants, pigments (dyes), thixotropic agents, ultraviolet absorbers, flame retardants, surfactants (including leveling agents), dispersing agents, dehydrating agents, adhesion promoters, and antistatic agents, in a range that does not inhibit the object of the present invention.

The main agent (A) preferably contains at least one selected from the group consisting of fillers, anti-aging agents, colorants, viscosity modifiers, and plasticizers.

The curing agent (B) preferably contains at least one selected from the group consisting of fillers, anti-aging agents, colorants, viscosity modifiers, plasticizers, and polyhydric alcohols having a number average molecular weight of less than 500. The polyhydric alcohols having a number average molecular weight of less than 500 are used as components for adjusting the physical properties of the cured product by the curing agent (B). For example, the low-molecular-weight polyhydric alcohols described above can be used as the polyhydric alcohols having a number average molecular weight of less than 500. According to one embodiment, the number average molecular weight of the polyhydric alcohols is preferably 200 or less. The number of hydroxy groups contained in a molecule of the polyhydric alcohol is, for example, from 2 to 4. In the curing agent (B), preferably from 5 to 20 mass% of the polyhydric alcohols is contained.

The adhesive composition needs not include a catalyst such as an organometallic compound, a tertiary amine, or the like. That is, according to one embodiment, the adhesive composition is preferably free of a catalyst such as an organometallic compound, a tertiary amine, or the like.

Silane Compound (X)

The adhesive composition contains a silane compound (X) in at least one of the main agent (A) or the curing agent (B). Since the adhesive composition contains the silane compound (X), the effect of improving adhesive strength of the cured product to metals can be achieved. By allowing the silane compound (X) to form a covalent bond with a metal in a state where compatibility of the adhesive with a metal is increased by the epoxy compound (a2), an even higher effect of improving adhesive strength can be achieved.

The silane compound (X) is preferably contained in an agent that does not contain a component having a high reactivity with the silane compound (X), of the main agent (A) and the curing agent (B). Accordingly, it is possible to avoid reaction between the silane compound (X) with the component before mixing the main agent (A) and the curing agent (B).

From the perspective of enhancing reactivity with the components in the main agent (A) and the curing agent (B), the silane compound (X) preferably has one functional group selected from an isocyanate group, an amino group, an epoxy group, a mercapto group, an isocyanurate group, a ketimine group, and the like in a molecule. Among these, from the perspective of bonding a soft segment in the cured product with a metal and enhancing the adhesive strength, a silane compound having at least one isocyanate group in a molecule is preferred. The isocyanate group-containing silane compound is contained in the main agent (A). The number of functional groups contained in the silane compound (X) is preferably from 1 to 3.

According to one embodiment, the functional group is preferably bonded to a silicon atom via an alkylene group. The number of carbons in the alkylene group is preferably from 1 to 5 and, for example, a methylene group, an ethylene group, or a propylene group is used.

According to one embodiment, from the perspective of enhancing reactivity with metals, the silane compound (X) preferably has at least one other functional group such as an alkoxy group, in addition to the functional group described above. Preferably, the functional group is bonded to a silicon atom, and 1 to 3 of the functional groups are contained in the silane compound (X). The number of carbons of the alkoxy group is preferably from 1 to 3 and, for example, a methoxy group or an ethoxy group is preferably used.

Examples of the silane compound (X) having an isocyanate group include 3-isocyanatopropyltriethoxysilane, 3-isocyanatopropyltriethoxysilane, 3-isocyanatopropylmethyldimethoxysilane, and 3-isocyanatopropylmethyldiethoxysilane.

Examples of the silane compound (X) having an amino group include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the silane compound (X) having an epoxy group include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

Examples of the silane compound (X) having a mercapto group include 3-mercaptopropylmethyldimethoxysilane and 3-mercaptopropyltrimethoxysilane.

Examples of the silane compound (X) having an isocyanurate group include tris(3-trimethoxysilylpropyl)isocyanurate.

Examples of the silane compound (X) having a ketimine group include 3-trimethoxysilyl-N-(1,3-dimethyl-butylidene)propylamine.

According to the adhesive composition of the present embodiment, excellent physical properties are exhibited for both of the adhesive strength and the elongation at break. Specifically, the adhesive strength is 10 MPa or greater, and the elongation at break is 100% or greater. Such physical properties of the cured product include a degree of adhesive strength corresponding to the adhesive strength of an epoxy resin-based adhesive while the elongation at break is equal to or similar to that of a known polyurethane-based adhesive. The cured product having such properties is suitable for, for example, bonding components of a structural member such as a body of an automobile.

The adhesive strength is preferably 15 MPa or greater, and more preferably 20 MPa or greater. The upper limit value of the adhesive strength is not particularly limited and, for example, is approximately 80 MPa.

The elongation at break is preferably 150% or greater, more preferably 200% or greater, and even more preferably 250% or greater. The upper limit of the elongation at break is not particularly limited, but is, for example, approximately 500%.

Furthermore, according to the adhesive composition of the present embodiment, excellent strength at break is exhibited. Specifically, the strength at break is 10 MPa or greater, preferably 15 MPa or greater, more preferably 20 MPa or greater, and even more preferably 25 MPa or greater. The upper limit of the strength at break is not particularly limited, but is, for example, approximately 100 MPa.

The adhesive composition of the present embodiment is not limited to, for example, a body of an automobile, and is used for bonding components of various structural members. In addition to use as an adhesive, the adhesive composition of the present embodiment can be used, for example, as paint, waterproof material, flooring material, elastomer, artificial leather, spandex, and the like.

Method for Producing Adhesive Composition

A method for producing an adhesive composition according to one embodiment includes preparing the main agent (A) and preparing the curing agent (B).

In the preparation of the main agent (A), a urethane prepolymer (a1) is prepared by reacting a raw material polyisocyanate and a polyol compound (a3) so that the index is from 2.05 to 12 and the polyol compound (a3) is completely converted into monomer units of the urethane prepolymer (a1), and then an epoxy compound (a2) is added to this. Accordingly, the main agent (A) containing the urethane prepolymer (a1), the epoxy compound (a2), and the remaining polyisocyanate (a4) is prepared. Note that the raw material polyisocyanate, the polyol compound (a3), the urethane prepolymer (a1), the remaining polyisocyanate (a4), and the epoxy compound (a2) are respectively identical to the raw material polyisocyanate, the polyol compound (a3), the urethane prepolymer (a1), the remaining polyisocyanate (a4), and the epoxy compound (a2) described above.

In the preparation of the curing agent (B), the curing agent (B) containing a polyol compound (b1) and a polyamine compound (b2) is prepared. Note that the polyol compound (b1) and the polyamine compound (b2) are, respectively, configured identical to the polyol compound (b1) and the polyamine compound (b2) described above.

In the present production method, a silane compound (X) is further added in at least one of the preparation of the main agent (A) or the preparation of the curing agent (B).

The adhesive composition described above can be produced using the production method described above.

Experiment

To study the effects of embodiments of the present invention, adhesive compositions were prepared based on the blended amounts listed in Table 1 and Table 2 and, the cured products thereof were measured for their strength at break, elongation at break, and adhesive strength to each of an aluminum material and a steel material.

Each of the urethane prepolymers 1 to 5 was prepared as described below, the epoxy compound (a2), the silane compound (X), and the additives listed in the tables were added, and thus a main agent was prepared. In addition, raw materials shown in the table were mixed to prepare a curing agent.

Synthesis of Urethane Prepolymer 1

100 g of polytetramethylene ether glycol and 100 g of 4,4'-diphenylmethane diisocyanate (index 4.0) were stirred for 4 hours at 80°C in a nitrogen atmosphere and reacted, and thus a urethane prepolymer 1 was synthesized.

Synthesis of Urethane Prepolymer 2

100 g of polytetramethylene ether glycol and 150 g of 4,4'-diphenylmethane diisocyanate (index 6.0) were stirred for 4 hours at 80°C in a nitrogen atmosphere and reacted, and thus a urethane prepolymer 2 was synthesized.

Synthesis of Urethane Prepolymer 3

100 g of polycarbonate diol and 100 g of 4,4'-diphenylmethane diisocyanate (index 4.0) were stirred for 4 hours at 80°C in a nitrogen atmosphere and reacted, and thus a urethane prepolymer 3 was synthesized.

Synthesis of Urethane Prepolymer 4

100 g of polytetramethylene ether glycol and 50 g of 4,4'-diphenylmethane diisocyanate (index 2.0) were stirred for 4 hours at 80°C in a nitrogen atmosphere and reacted, and thus a urethane prepolymer 4 was synthesized.

Synthesis of Urethane Prepolymer 5

100 g of silicone oil having both terminals modified with carbinol and 31 g of 4,4'-diphenylmethane diisocyanate (index 4.0) were stirred for 8 hours at 80°C in a nitrogen atmosphere and reacted, and thus a urethane prepolymer 5 was synthesized.

As the polytetramethylene ether glycol, polycarbonate diol, and 4,4'-diphenylmethane diisocyanate used in the preparation of the urethane prepolymers 1 to 5 described above, those described below were used.

• Polytetramethylene ether glycol:
  PTMG1000 (number average molecular weight: 1000), available from Mitsubishi Chemical Corporation
• Polycarbonate diol:
  Duranol T6001 (number average molecular weight: 1000), available from Asahi Kasei Corporation
• 4,4'-Diphenylmethane diisocyanate:
  Millionate MT (molecular weight: 250), available from Tosoh Corporation
• Silicone oil having both terminals modified with carbinol:
  Silicone oil having both terminals modified with carbinol, KF-6002, available from Shin-Etsu Chemical Co., Ltd.

In the table, the values of the urethane prepolymers 1 to 5 each indicate a total amount of the urethane prepolymer (a1) and the remaining polyisocyanate (a4). As raw materials other than the urethane prepolymers 1 to 5 listed in the tables, those described below were used. In the table, the amount of the raw material is indicated by parts by mass.

• Epoxy 1: Urethane-modified epoxy, ADEKA RESIN EPU-1395 (epoxy equivalent: 215 g/eq), available from Adeka Corporation
• Epoxy 2: Urethane-modified epoxy, EPU-80, epoxy equivalent: 1400 g/eq, available from Adeka Corporation
• Epoxy 3: Bifunctional reactive epoxy, ED-523T, epoxy equivalent: 140 g/eq, available from Adeka Corporation
• Silane 1: 3-Isocyanatopropyltrimethoxysilane, Siliquest A-Link 35, available from Momentive Performance Materials
• Silane 2: Tris-(trimethoxysilylpropyl)isocyanurate, KBM-9659, available from Shin-Etsu Chemical Co., Ltd.
• Carbon black: 200 MP, available from NSCC Carbon Co., Ltd.
• Calcium carbonate 1: heavy calcium carbonate, Super S, available from Maruo Calcium Co., Ltd.
• Plasticizer: diisononyl phthalate, available from Jay Plus, Inc.
• Polyol 1: Polypropylene glycol (number average molecular weight: 2000 to 3000), SANNIX PL-2100, available from Sanyo Chemical Industries, Ltd.
• Polyol 2: Polyisoprene polyol, Poly ip, available from Idemitsu Kosan Co., Ltd.
• Polyol 3: Silicone oil having both terminals modified with carbinol, KF-6002, available from Shin-Etsu Chemical Co., Ltd.
• Polyol 4: Polytetramethylene ether glycol, PTMG2000 (number average molecular weight: 2000), available from Mitsubishi Chemical Corporation.
• Polyamine: diethylmethylbenzenediamine, DETDA, available from Mitsui Fine Chemicals, Inc.
• Calcium carbonate 2: light calcium carbonate, KALFAIN 200, available from Maruo Calcium Co., Ltd.
• Silica: Reolosil QS-102S, available from Tokuyama Corporation

The isocyanate group/amino group ratio and the isocyanate group/hydroxy group ratio are also listed in the table. Note that, although not shown in the tables, the amino group/hydroxy group ratio was adjusted in a range of from 1.5 to 6.

The main agent and curing agent prepared were mixed in a mass ratio of 1:1, and the strength at break, the elongation at break, and the adhesive strength were measured as described below.

Strength at Break, Elongation at Break

A tensile test was conducted in accordance with JIS K6251 using a dumbbell-shaped No. 3 test piece, and the tensile strength (strength at break) and elongation at the time of rupture (elongation at break) were measured under conditions of a temperature of 20°C and a crosshead speed (tensile speed) of 200 mm/min. Marked lines for measurement of the elongation at break were marked 20 mm apart. As a result, when the strength at break was 10 MPa or greater, the strength at break was evaluated as excellent, and when the elongation at break was 100% or greater, the elongation at break was evaluated as excellent.

Adhesive Strength

By using test pieces each including aluminum or steel as an adherend, tensile shear test was conducted in accordance with JIS K6850, and tensile lap-shear strength (adhesive strength) was measured under conditions of a temperature of 20°C and a crosshead speed of 50 mm/min. As the result, when the adhesive strength was 10 MPa or greater, the adhesive strength was evaluated as excellent.

[Table 1]

| | | Example | | | | | | | | |
|---|---|---|---|---|---|---|---|---|---|---|
| | | 1 | 2 | 3 | 4 | 5 | 6 | 7 | 8 | 9 |
| Main agent (A) | Urethane prepolymer 1 | 40 | | | 40 | 40 | 40 | 40 | 40 | 40 |
| | Urethane prepolymer 2 | | 40 | | | | | | | |
| | Urethane prepolymer 3 | | | 40 | | | | | | |
| | Urethane prepolymer 4 | | | | | | | | | |
| | Urethane prepolymer 5 | | | | | | | | | |
| | Carbon black | 4 | 4 | 4 | 4 | 4 | 4 | 4 | 4 | 4 |
| | Calcium carbonate 1 | 15 | 15 | 15 | 15 | 15 | 3 | 15 | 15 | 15 |
| | Plasticizer | 3 | 3 | 3 | 3 | 7 | | 7 | 3 | 3 |
| | Epoxy 1 | 5 | 5 | 5 | 5 | 1 | 20 | 5 | | |
| | Epoxy 2 | | | | | | | | 5 | |
| | Epoxy 3 | | | | | | | | | 5 |
| | Silane 1 | 2 | 2 | 2 | 2 | 2 | 2 | | 2 | 2 |
| | Total | 69 | 69 | 69 | 69 | 69 | 69 | 71 | 69 | 69 |
| | Index | 4 | 6 | 4 | 4 | 4 | 4 | 4 | 4 | 4 |
| Curing agent (B) | Polyol 1 | 29 | 23 | 29 | | 29 | 29 | 29 | 29 | 29 |
| | Polyol 2 | | | | 29 | | | | | |
| | Polyol 3 | | | | | | | | | |
| | Polyol 4 | | | | | | | | | |
| | Polyamine | 8 | 5 | 8 | 8 | 8 | 8 | 8 | 8 | 8 |
| | Calcium carbonate 2 | 27 | 36 | 27 | 27 | 27 | 27 | 27 | 27 | 27 |
| | Silica | 5 | 5 | 5 | 5 | 5 | 5 | 5 | 5 | 5 |
| | Silane 2 | | | | | | | 2 | | |
| | Total | 69 | 69 | 69 | 69 | 69 | 69 | 71 | 69 | 69 |
| Isocyanate group/active hydrogen group ratio | | 1.07 | 2.70 | 1.07 | 1.09 | 1.07 | 1.07 | 1.07 | 1.07 | 1.07 |
| Isocyanate group/amino group ratio | | 1.34 | 3.57 | 1.34 | 1.34 | 1.34 | 1.34 | 1.34 | 1.34 | 1.34 |
| Polyol (a3) SP value $(J/cm^3)^{1/2}$ | | 16.6 | 16.6 | 19.2 | 16.6 | 16.6 | 16.6 | 16.6 | 16.6 | 16.6 |
| Polyol (b1) SP value $(J/cm^3)^{1/2}$ | | 15.8 | 15.8 | 15.8 | 14.2 | 15.8 | 15.8 | 15.8 | 15.8 | 15.8 |
| $\Delta$SP value $(J/cm^3)^{1/2}$ | | 0.8 | 0.8 | 3.4 | 2.4 | 0.8 | 0.8 | 0.8 | 0.8 | 0.8 |
| Strength at break (MPa) | | 27 | 32 | 31 | 25 | 27 | 28 | 26 | 20 | 21 |
| Elongation at break (%) | | 320 | 300 | 260 | 310 | 310 | 250 | 300 | 350 | 280 |
| Adhesive strength, aluminum (MPa) | | 23 | 22 | 20 | 21 | 20 | 23 | 22 | 13 | 15 |
| Adhesive strength, steel (MPa) | | 21 | 24 | 23 | 22 | 20 | 22 | 22 | 17 | 16 |

[Table 2]

| | | Comparative Example | | | | | | |
|---|---|---|---|---|---|---|---|---|
| | | 1 | 2 | 3 | 4 | 5 | 6 | 7 |
| Main agent (A) | Urethane prepolymer 1 | 40 | 40 | 40 | | 40 | | |
| | Urethane prepolymer 2 | | | | | | | |
| | Urethane prepolymer 3 | | | | | | | |
| | Urethane prepolymer 4 | | | | 40 | | | |
| | Urethane prepolymer 5 | | | | | | 40 | 40 |
| | Carbon black | 4 | 4 | 4 | 4 | 4 | 4 | 4 |
| | Calcium carbonate 1 | 15 | 15 | 15 | 15 | 15 | 15 | 15 |
| | Plasticizer | 10 | 5 | 8 | 3 | 3 | 3 | 3 |
| | Epoxy 1 | | 5 | | 5 | 5 | 5 | 5 |
| | Epoxy 2 | | | | | | | |
| | Epoxy 3 | | | | | | | |
| | Silane 1 | | | 2 | 2 | 2 | 2 | 2 |
| | Total | 69 | 69 | 69 | 69 | 69 | 69 | 69 |
| | Index | 4 | 4 | 4 | 2 | 4 | 4 | 4 |
| Curing agent (B) | Polyol 1 | 29 | 29 | 29 | 28 | | | 20 |
| | Polyol 2 | | | | | | | |
| | Polyol 3 | | | | | 29 | | |
| | Polyol 4 | | | | | | 20 | |
| | Polyamine | 8 | 8 | 8 | 3 | 8 | 4 | 4 |
| | Calcium carbonate 2 | 27 | 27 | 27 | 33 | 27 | 40 | 40 |
| | Silica | 5 | 5 | 5 | 5 | 5 | 5 | 5 |
| | Silane 2 | | | | | | | |
| | Total | 69 | 69 | 69 | 69 | 69 | 69 | 69 |
| Isocyanate group/active hydrogen group ratio | | 1.07 | 1.07 | 1.07 | 0.72 | 1.11 | 0.88 | 0.94 |
| Isocyanate group/amino group ratio | | 1.34 | 1.34 | 1.34 | 1.19 | 1.34 | 1.27 | 1.27 |
| Polyol (a3) SP value $(J/cm^3)^{1/2}$ | | 16.6 | 16.6 | 19.2 | 16.6 | 16.6 | 12.5 | 12.5 |
| Polyol (b1) SP value $(J/cm^3)^{1/2}$ | | 15.8 | 15.8 | 15.8 | 15.8 | 12.5 | 16.6 | 15.8 |
| ΔSP value $(J/cm^3)^{1/2}$ | | 0.8 | 0.8 | 3.4 | 0.8 | 4.1 | 4.1 | 3.3 |
| Strength at break (MPa) | | 24 | 26 | 24 | 7 | 6 | 2 | 3 |
| Elongation at break (%) | | 240 | 300 | 240 | 160 | 130 | 20 | 30 |
| Adhesive strength, aluminum (MPa) | | 6 | 9 | 8 | 5 | 1 | 1 | 1 |
| Adhesive strength, steel (MPa) | | 7 | 9 | 9 | 7 | 2 | 1 | 2 |

From the comparison between Examples 1 to 9 and Comparative Examples 1 to 7, it was found that an adhesive composition containing a urethane polyprepolymer (a1) produced using a raw material polyisocyanate and a polyol compound (a3) and setting the index to 2.05 to 12, an epoxy compound (a2), and a remaining polyisocyanate (a4) in a main agent, containing a polyol compound (b1) and a polyamine compound (b2) in a curing agent, and containing a silane compound (X) in at least one of the main agent (A) or the curing agent (B), the SP values of the polyol compound (a3) and the polyol compound (b1) each being from 14.0 to 21.0 $(J/cm^3)^{1/2}$, and a difference between the SP value of the polyol compound (a3) and the SP value of the polyol compound (b1) being from 0.1 to 4.0 $(J/cm^3)^{1/2}$ can provide a cured product that can achieve excellent adhesive strength and elongation at break in a compatible manner. In particular, it was found that a polyurethane-based adhesive having excellent adhesive strength to metal materials can be obtained.

Furthermore, according to the adhesive composition, it was found that a polyurethane-based adhesive having excellent strength at break can be obtained. That is, according to the adhesive composition, it was found that excellent tensile properties, such as elongation at break and strength at break, and excellent adhesive strength can be provided in a compatible manner.

Note that, even when the isocyanate group/active hydrogen group ratio was changed in a range of from 0.8 to 4, a ratio of change of the adhesive strength and the elongation at break was suppressed to within ± 20% with respect to the adhesive strength and the elongation at break when the mixing ratio (mass ratio) of the main agent (A) to the curing agent (B) was 1:1.

**Claims**

1. A two-part curable adhesive composition comprising:

a main agent (A) containing a urethane prepolymer (a1) and an epoxy compound (a2), and
a curing agent (B) containing a polyol compound (b1) and a polyamine compound (b2),
the urethane prepolymer (a1) being obtained by reacting a raw material polyisocyanate and a polyol compound (a3) having at least two hydroxy groups in a molecule, an equivalent ratio of isocyanate groups in the raw material polyisocyanate to a hydroxy group in the polyol compound (a3) is from 2.05 to 12, the polyol compound (a3) being completely converted into monomer units of the urethane prepolymer (a1),
the main agent (A) further containing, in addition to the urethane prepolymer (a1), a remaining polyisocyanate (a4) which is a remainder of the raw material polyisocyanate that has not been reacted with the polyol compound (a3),
at least one of the main agent (A) or the curing agent (B) containing a silane compound (X),
an SP value of each of the polyol compound (a3) and the polyol compound (b1) being from 14.0 to 21.0 $(J/cm^3)^{1/2}$, and
a difference between the SP value of the polyol compound (a3) and the SP value of the polyol compound (b1) being from 0.1 to 4.0 $(J/cm^3)^{1/2}$,
wherein the SP value refers to a value $\delta$ calculated by the following Small's equation:

$$\delta = d\Sigma G/M$$

wherein d refers to density, G refers to intermolecular gravitational constant, the Small constant, and M refers to the molecular weight.

2. The two-part curable adhesive composition according to claim 1, wherein

an equivalent ratio of isocyanate groups in the main agent (A) to active hydrogen groups in the curing agent (B) is from 0.8 to 4, and
an equivalent ratio of the isocyanate groups in the main agent (A) to amino groups in the polyamine compound (b2) is from 1.2 to 6.

3. The two-part curable adhesive composition according to claim 1 or 2, wherein the polyol compound (a3) is at least one selected from the group consisting of polyester polyol, polytetramethylene ether glycol, polycarbonate polyol, polycaprolactone polyol, and partially modified products obtained by partially modifying these.

4. The two-part curable adhesive composition according to any one of claims 1 to 3, wherein the polyol compound (b1) is at least one selected from the group consisting of polyoxypropylene glycol, polybutadiene polyol, polyisoprene polyol, polyacrylic polyol, and partially modified products obtained by partially modifying these.

5. The two-part curable adhesive composition according to any one of claims 1 to 4, wherein an epoxy equivalent of the epoxy compound (a2) is from 100 to 500 g/eq.

6. The two-part curable adhesive composition according to any one of claims 1 to 5, wherein the epoxy compound (a2) is an epoxy compound having at least one urethane bond in a molecule.

7. The two-part curable adhesive composition according to any one of claims 1 to 6, wherein the silane compound (X) is a silane compound having at least one isocyanate group in a molecule.

8. The two-part curable adhesive composition according to any one of claims 1 to 7, wherein a mass of the epoxy compound (a2) with respect to a mass of the two-part curable adhesive composition is from 0.1 to 30 mass%.

9. The two-part curable adhesive composition according to any one of claims 1 to 8, wherein a tensile lap-shear strength in accordance with JIS K6850 of a cured product obtained by curing the two-part curable adhesive composition is 10 MPa or greater.

**Patentansprüche**

1. Eine zweiteilige härtbare Klebstoffzusammensetzung, aufweisend:

   ein Hauptwirkstoff (A), der ein Urethan-Prepolymer (a1) und eine Epoxidverbindung (a2) enthält, und
   ein Härtungsmittel (B), das eine Polyolverbindung (b1) und eine Polyaminverbindung (b2) enthält,
   wobei das Urethan-Prepolymer (a1) durch Umsetzung eines Rohstoff-Polyisocyanats und einer Polyolverbindung (a3) mit mindestens zwei Hydroxygruppen im Molekül erhalten wird, wobei das Äquivalentverhältnis von Isocyanatgruppen im Rohstoff-Polyisocyanat zu einer Hydroxygruppe in der Polyolverbindung (a3) 2,05 bis 12 beträgt, wobei die Polyolverbindung (a3) vollständig in Monomereinheiten des Urethan-Prepolymers (a1) umgewandelt ist,
   wobei der Hauptwirkstoff (A) zusätzlich zu dem Urethan-Prepolymer (a1) ein restliches Polyisocyanat (a4) enthält, das ein Rest des Rohstoff-Polyisocyanats ist, das nicht mit der Polyolverbindung (a3) umgesetzt wurde,
   wobei mindestens einer der Hauptwirkstoffe (A) oder der Härtungsmittel (B) eine Silanverbindung (X) enthält,
   ein SP-Wert jeder der Polyolverbindungen (a3) und der Polyolverbindung (b1) zwischen 14,0 und 21,0 $(J/cm^3)^{1/2}$ liegt, und
   eine Differenz zwischen dem SP-Wert der Polyolverbindung (a3) und dem SP-Wert der Polyolverbindung (b1) 0,1 bis 4,0 $(J/cm^3)^{1/2}$ beträgt,
   wobei der SP-Wert einen Wert $\delta$ bezeichnet, der nach der folgenden Small-Gleichung berechnet wird:

   $$\delta = d\Sigma G/M$$

   wobei d die Dichte, G die intermolekulare Gravitationskonstante, die Small-Konstante, und M das Molekulargewicht bezeichnet.

2. Die zweiteilige härtbare Klebstoffzusammensetzung nach Anspruch 1, wobei

   das Äquivalentverhältnis von Isocyanatgruppen im Hauptwirkstoff (A) zu aktiven Wasserstoffgruppen im Härtungsmittel (B) 0,8 bis 4 beträgt und
   das Äquivalentverhältnis der Isocyanatgruppen im Hauptwirkstoff (A) zu den Aminogruppen in der Polyaminverbindung (b2) zwischen 1,2 und 6 liegt.

3. Die zweiteilige härtbare Klebstoffzusammensetzung nach Anspruch 1 oder 2, wobei die Polyolverbindung (a3) mindestens eine ist, die ausgewählt ist aus der Gruppe bestehend aus Polyesterpolyol, Polytetramethylenetherglykol, Polycarbonatpolyol, Polycaprolactonpolyol und teilweise modifizierten Produkten, die durch teilweise Modifizierung dieser erhalten werden.

4. Die zweiteilige härtbare Klebstoffzusammensetzung nach einem der Ansprüche 1 bis 3, wobei die Polyolverbindung (b1) mindestens eine ist, ausgewählt aus der Gruppe bestehend aus Polyoxypropylenglykol, Polybutadienpolyol, Polyisoprenpolyol, Polyacrylpolyol und teilweise modifizierten Produkten, die durch teilweise Modifizierung dieser erhalten werden.

5. Die zweiteilige härtbare Klebstoffzusammensetzung nach einem der Ansprüche 1 bis 4, wobei ein Epoxidäquivalent der Epoxidverbindung (a2) 100 bis 500 g/eq beträgt.

6. Die zweiteilige härtbare Klebstoffzusammensetzung nach einem der Ansprüche 1 bis 5, wobei die Epoxidverbindung (a2) eine Epoxidverbindung mit mindestens einer Urethangruppe im Molekül ist.

7. Die zweiteilige härtbare Klebstoffzusammensetzung nach einem der Ansprüche 1 bis 6, wobei die Silanverbindung (X) eine Silanverbindung mit mindestens einer Isocyanatgruppe in einem Molekül ist.

8. Die zweiteilige härtbare Klebstoffzusammensetzung nach einem der Ansprüche 1 bis 7, wobei die Masse der Epoxyverbindung (a2) bezogen auf die Masse der zweiteiligen härtbaren Klebstoffzusammensetzung 0,1 bis 30 Massenprozent beträgt.

9. Die zweiteilige härtbare Klebstoffzusammensetzung nach einem der Ansprüche 1 bis 8, wobei eine Zugscherfestigkeit gemäß JIS K6850 eines durch Aushärten der zweiteiligen härtbaren Klebstoffzusammensetzung erhaltenen ausgehärteten Produkts 10 MPa oder mehr beträgt.

**Revendications**

1. Composition adhésive durcissable en deux parties, comprenant :

   un agent principal (A) contenant un prépolymère d'uréthane (a1) et un composé époxy (a2), et
   un agent de durcissement (B) contenant un composé de polyol (b1) et un composé de polyamine (b2),
   le prépolymère d'uréthane (a1) étant obtenu en faisant réagir une matière première polyisocyanate et un composé de polyol (a3) ayant au moins deux groupes hydroxy dans une molécule, un rapport équivalent de groupes isocyanate dans la matière première polyisocyanate à un groupe hydroxy dans le composé de polyol (a3) est compris entre 2,05 et 12, le composé de polyol (a3) étant complètement converti en unités monomériques du prépolymère d'uréthane (a1),
   l'agent principal (A) contenant en outre, en plus du prépolymère d'uréthane (a1), un polyisocyanate résiduel (a4) qui est un reste de la matière première polyisocyanate qui n'a pas réagi avec le composé de polyol (a3),
   au moins un parmi l'agent principal (A) ou l'agent de durcissement (B) contenant un composé de silane (X),
   une valeur SP de chacun parmi le composé de polyol (a3) et le composé de polyol (b1) étant comprise entre 14,0 et 21,0 $(J/cm^3)^{1/2}$, et
   une différence entre la valeur SP du composé de polyol (a3) et la valeur SP du composé de polyol (b1) étant comprise entre 0,1 et 4,0 $(J/cm^3)^{1/2}$,
   dans laquelle la valeur SP fait référence à une valeur $\delta$ calculée par l'équation de Small suivante :

$$\delta = d\Sigma G/M$$

   dans laquelle d désigne la masse volumique, G désigne la constante gravitationnelle intermoléculaire, la constante de Small, et M désigne le poids moléculaire.

2. Composition adhésive durcissable en deux parties selon la revendication 1, dans laquelle

   un rapport en équivalents des groupes isocyanate dans l'agent principal (A) aux groupes hydrogène actifs dans l'agent de durcissement (B) est compris entre 0,8 et 4, et
   un rapport en équivalents des groupes isocyanate dans l'agent principal (A) aux groupes amino dans le composé de polyamine (b2) est compris entre 1,2 et 6.

3. Composition adhésive durcissable en deux parties selon la revendication 1 ou 2, dans laquelle le composé de polyol (a3) est au moins un choisi dans le groupe constitué par un polyester polyol, un polytétraméthylène éther glycol, un polycarbonate polyol, un polycaprolactone polyol, et des produits partiellement modifiés obtenus par modification partielle de ceux-ci.

4. Composition adhésive durcissable en deux parties selon l'une quelconque des revendications 1 à 3, dans laquelle le composé de polyol (b1) est au moins un choisi dans le groupe constitué par un polyoxypropylèneglycol, un polybutadiène polyol, un polyisoprène polyol, un polyol polyacrylique, et des produits partiellement modifiés obtenus par modification partielle de ceux-ci.

5. Composition adhésive durcissable en deux parties selon l'une quelconque des revendications 1 à 4, dans laquelle un équivalent époxyde du composé époxy (a2) est compris entre 100 et 500 g/éq.

**6.** Composition adhésive durcissable en deux parties selon l'une quelconque des revendications 1 à 5, dans laquelle le composé époxy (a2) est un composé époxy ayant au moins une liaison uréthane dans une molécule.

**7.** Composition adhésive durcissable en deux parties selon l'une quelconque des revendications 1 à 6, dans laquelle le composé de silane (X) est un composé de silane ayant au moins un groupe isocyanate dans une molécule.

**8.** Composition adhésive durcissable en deux parties selon l'une quelconque des revendications 1 à 7, dans laquelle une masse du composé époxy (a2) rapportée à une masse de la composition adhésive durcissable en deux parties est comprise entre 0,1 et 30 % en masse.

**9.** Composition adhésive durcissable en deux parties selon l'une quelconque des revendications 1 à 8, dans laquelle une résistance au cisaillement chevauchant par traction conformément à JIS K6850 d'un produit durci obtenu par durcissement de la composition adhésive durcissable en deux parties est de 10 Mpa ou plus.

**EP 4 130 184 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5743042 B
- JP 2006291060 A
- WO 2014184270 A1
- US 2014031500 A1
- EP 3623439 A1